# EUROPEAN PATENT SPECIFICATION

(11) **EP 4 656 311 B1**
(45) Date of publication and mention of the grant of the patent: **02.12.2026**
(21) Application number: 25179300.6
(22) Date of filing: 28.05.2025
(51) Int. Cl.: B22D 7/00, B22D 9/00, B22D 29/04, B25B 11/00, B65G 47/91, B66C 1/02

(54) **HANDLING DEVICE FOR HANDLING INCANDESCENT METAL BARS, ESPECIALLY INCANDESCENT PRECIOUS METAL BARS**
HANDHABUNGSVORRICHTUNG ZUM HANDHABEN GLÜHENDER METALLBARREN, INSBESONDERE GLÜHENDER EDELMETALLBARREN
DISPOSITIF DE MANIPULATION DESTINÉ À LA MANIPULATION DE BARRES MÉTALLIQUES INCANDESCENTES, NOTAMMENT DE BARRES DE MÉTAUX PRÉCIEUX INCANDESCENTES

(30) Priority: 29.05.2024 IT 202400012262
(43) Date of publication of application: 03.12.2025
(73) Proprietor: IKOI S.p.A., 36056 Tezze sul Brenta (VI) (IT)
(72) Inventor: Faoro, Giovanni, 36061 Bassano del Grappa (VI) (IT)
(74) Representative: Cosenza, Simona

(56) References cited:
- DE-C1- 19 817 217
- US-A1- 2003 201 593
- US-A1- 20240 033 881

## Description

The present invention relates to a handling device for handling incandescent metal bars, especially incandescent precious metal bars.

The present invention also relates to a machine for producing metal bars, especially precious metal bars, comprising such a handling device.

In the field of production of metal bars, especially bars made of precious metal such as gold, silver, copper, and their alloys, it is known to employ moulds comprising one or more cavities for forming a respective bar, in which the molten metal is solidified. The melting of the metal can occur directly in the cavities of the mould, or in a separate crucible. In the first case, the metal in the solid state, generally in the form of granules, flakes, or the like, is loaded into each cavity of the mould. In the second case, the molten metal in the crucible is poured into each cavity of the mould.

A particularly critical step is extracting the bars from the cavities of the forming mould where the solidification of the molten metal has occurred.

Generally, the extraction occurs by tilting the mould. Often, during extraction, the bars are damaged; in particular, marks, gouges, scratches, and the like, remain engraved on their surfaces, which, in order to be removed, require subsequent surface finishing processes to be performed. This results in a loss of metal, which must be collected and then recovered, in addition to representing a complication and an increase in production costs.

The step of extracting the bars from the forming mould is further generally performed when the bar, and with it the mould, has cooled to temperatures below the solidification temperature and close to room temperature. This results in lengthened times and further increased production costs of the bars, as in each production cycle the mould must be reheated to temperatures close to the melting temperatures, which can be necessary even when the metal melting occurs in a crucible, in order to better control the solidifying step and the temperature gradients generated in the bars.

US 2024/033881 A1 relates to a holding mechanism for holding a substrate and an exposure apparatus including the holding mechanism.

DE 198 17 217 C1 relates to a suction gripper for suctioning a workpiece to be manipulated, comprising a suction plate, a sealing profile attached to the suction plate and intended to be placed against the workpiece, the sealing profile enclosing a suction chamber, and a vacuum connection connected to the suction chamber, wherein at least one insert element that can be placed against the surface of the workpiece is provided on the underside of the suction plate facing the workpiece. The invention further relates to an insert element for a suction gripper.

US 2003/201593 A1 concerns a block suction apparatus for fixing plate-shaped work pieces on a fixing beam or fixing table using under-pressure, wherein at least one contact surface of the block suction apparatus comprises a sealing plate with a sealing lip at its periphery, wherein the sealing lip delimits a suction chamber, wherein at least one supporting element is provided within the suction chamber.

An object of the present invention is to provide a handling device for handling metal bars which allows to overcome the drawbacks of the prior art.

A particular object of the present invention is to provide a handling device which allows to handle metal bars in order to extract them from the respective forming mould when still incandescent and without damaging them.

Another object of the present invention is to make a handling device for handling metal bars that is particularly simple and functional, with contained costs.

Another object of the present invention is to provide a machine for producing metal bars, especially precious metal bars, which allows to reduce the production costs of such bars, ensuring intact bars with high surface quality to be obtained.

These objects according to the present invention are achieved by making a handling device for handling incandescent metal bars, especially incandescent precious metal bars, and a machine for producing metal bars, especially precious metal bars, comprising such a handling device as set forth in the independent claims.

Further features are provided in the dependent claims.

The features and advantages of a handling device for handling incandescent metal bars, especially incandescent precious metal bars, and a machine for producing metal bars, especially precious metal bars, according to the present invention will become more apparent from the following exemplary and non-limiting description, referred to the attached schematic drawings, in which:
Figures 1, 2 and 3 are axonometric views of a possible embodiment of a handling device according to the present invention in three different operating positions;
Figure 3a shows, on an enlarged scale, a detail of Figure 3;

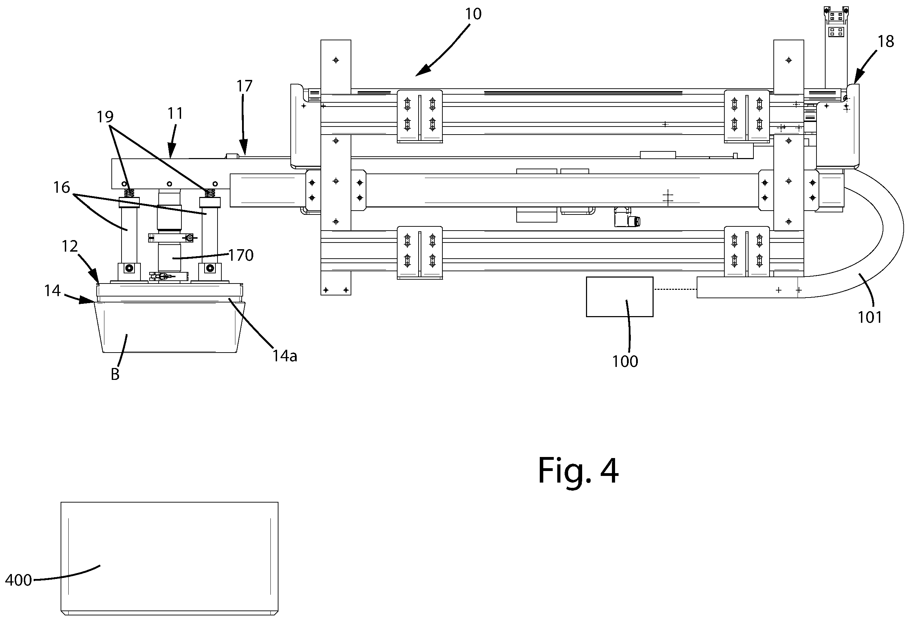

Figure 4 is a front view of Figure 2;
Figures 5A and 5B are schematic sections along different planes of the detail of Figure 3a without bar;

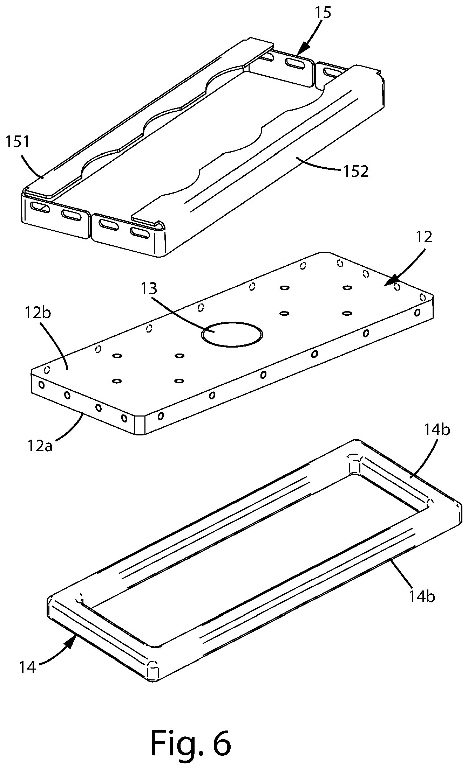

Figure 6 is an axonometric and exploded view of some components of the handling device of the preceding figures;

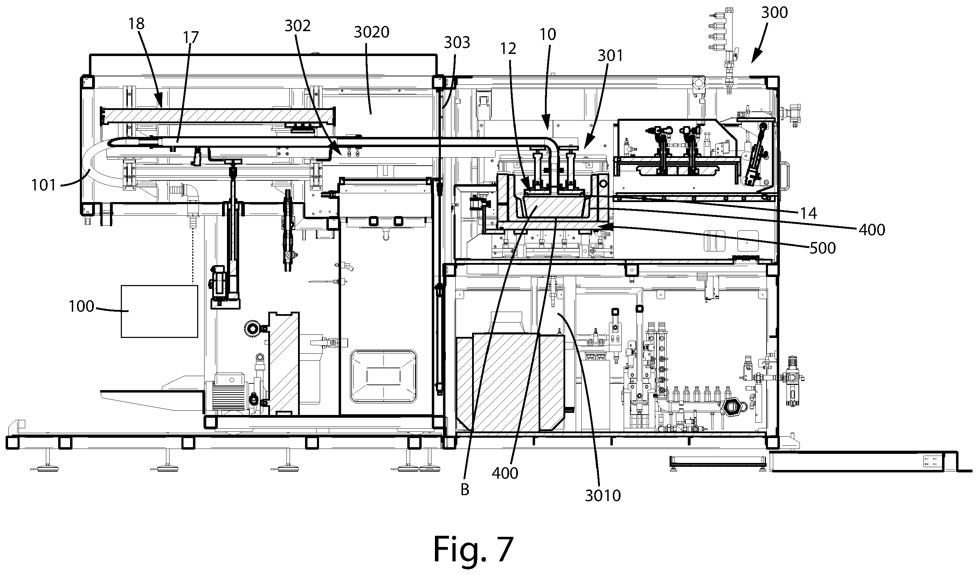

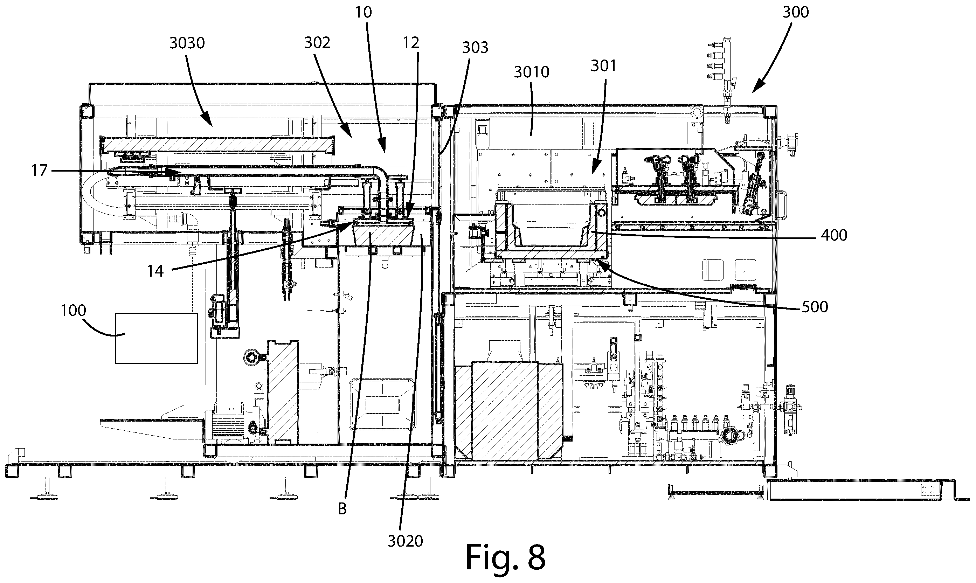

Figures 7 and 8 schematically show a possible embodiment of a machine for producing metal bars provided with a handling device according to the present invention in two different operating positions, respectively for gripping and extracting a bar from the related mould, and for arranging and releasing the extracted bar.

With reference to the attached figures, a handling device 10 is shown for handling incandescent metal bars B, especially incandescent precious metal bars B. Precious metal especially means gold, silver, copper, or their alloys. Incandescent metal bars B mean bars at temperatures above 500°C and typically between 600°C and 900°C.

The bar B generally has the shape of a prism or a parallelepiped, but it can also have the shape of a solid of revolution (such as for example the shape of a cylinder or a truncated cone), or various other shapes. Generally, the bar B has the shape of a trapezoidal prism. Typically, the bar B has bases and/or faces with substantially flat surfaces. The bars B can have a weight less than or equal to 40 kg.
The handling device 10 comprises:
- at least one plate body 12 having a first face 12a and a second face 12b opposite to each other and at least one opening 13 passing therethrough in thickness and extending between the first face 12a and the second face 12b and configured to be connected to an air suction unit 100;
- at least one sealing gasket 14 that is configured to make an air sealing and that is connected to the plate body 12 along a closed line surrounding the opening 13, wherein the sealing gasket 14 comprises a protruding portion 14a protruding from the first face 12a of the plate body 12 to delimit, in use (i.e., when in contact with a surface of the bar B), a chamber in which a vacuum can be generated by air suction.

The first face 12a is the face of the plate body 12 which, in use, faces the bar B or the mould containing the bar B. The first face 12a advantageously consists of a flat surface.

The second face 12b is the face of the plate body 12 opposite to the first face 12a and advantageously consists of a flat surface.

Preferably, the first face 12a and the second face 12b consist of flat surfaces parallel to each other.

The sealing gasket 14 is preferably arranged along the perimeter edge delimiting the first face 12a.

If there are multiple openings 13, a respective sealing gasket 14 can be provided for each of them, or, for two or more of them, a common sealing gasket 14 can be provided to surround them together.

The protruding portion 14a of the sealing gasket 14 overhangs from the first face 12a. Considering the handling device 10 in usual employing conditions, the protruding portion 14a protrudes from the first face 12a below it.

The handling device 10 is therefore of the "suction cup" type. By resting the sealing gasket 14 on the surface to which it is to adhere, i.e., a surface of the bar B, identified for example by a face or a base of the bar B, the chamber delimited by the sealing gasket 14 between the first face 12a of the plate body 12 and such surface is placed under vacuum by sucking air through the air suction unit 100, thereby generating a force adapted to retain the bar B.

Preferably, the handling device 10 comprises a supporting structure 11 to which the at least one plate body 12 is coupled.

In the embodiment shown in the attached figures, the handling device 10 comprises a single plate body 12; however, alternative embodiments in which the handling device 10 comprises two or more plate bodies 12 are not excluded. In such case, if a supporting structure 11 is provided, it can be common to all the plate bodies 12 or a separate supporting structure 11 can be provided for each plate body 12.

According to the present invention, at least the protruding portion 14a of the sealing gasket 14 is made of at least one material resistant to temperatures above 500°C, preferably comprised between 500°C and 1000°C, even more preferably comprised between 600°C and 900°C.

Advantageously, furthermore, at least the protruding portion 14a of the sealing gasket 14 is made to be deformable, preferably elastically deformable, even more preferably elastically deformable in compression and/or bending.

Preferably, at least the protruding portion 14a of the sealing gasket 14 is made of at least one material selected from:
- materials comprising silica fibers;
- materials comprising graphite;
- materials comprising mica;
- materials comprising boron nitride;
- materials comprising carbon;
- materials made of glass fibers;
- materials made of synthetic fibers or yarns. Advantageously, at least the protruding portion 14a of the sealing gasket 14, or preferably the entire sealing gasket 14, consists of at least one fabric, tape, braid, packing or the like, made at least partially with fibers, threads, yarns, or sheets of at least one said materials.

Preferably, at least the protruding portion 14a of the sealing gasket 14 or preferably the entire sealing gasket 14 comprises at least one reinforcing insert or coating made of metal, advantageously made of stainless steel.

Preferably, at least the protruding portion 14a of the sealing gasket 14 or preferably the entire sealing gasket 14 is impregnated with lubricating and/or locking and/or inhibiting corrosion agents.

In a preferred embodiment, at least the protruding portion 14a of the sealing gasket 14 is made of a material comprising silica fibers with a silica (SiO₂) content greater than or equal to 94% by mass proportion.

Advantageously, at least the protruding portion 14a of the sealing gasket 14 or preferably the entire sealing gasket 14 consists of a fabric made of material comprising silica fibers, preferably with a silica (SiO₂) content greater than or equal to 94% by mass proportion.

In a preferred embodiment, at least the protruding portion 14a of the sealing gasket 14 or the entire sealing gasket 14 consists of one or more packings made of material comprising silica fibers, preferably with a silica (SiO₂) content greater than or equal to 94% by mass proportion.

Preferably, the protruding portion 14a of the sealing gasket 14 or the entire sealing gasket 14 is elastically deformable in compression and/or bending.

An example of a material by which the sealing gasket 14 or at least the protruding portion 14a thereof can be made is commercialized under the name Fiber-sil^{®} made of silica fiber (Silex) by the company Tespe SRL.

The applicant has identified, among the materials listed above, particularly including, for example, a material comprising silica fibers, preferably with a silica (SiO₂) content greater than or equal to 94% by mass proportion, features of flexibility and high temperature resistance which allow it to be employed as a sealing gasket 14 in a "suction cup" handling device 10 for handling incandescent metal bars B.

In a possible alternative embodiment, at least the protruding portion 14a of the sealing gasket 14, or the entire sealing gasket 14, is made in the form of at least one graphite packing, consisting of strands of layered graphite tapes inside a braided weave with a weave shape suitable for the purpose. Advantageously, such packing can be reinforced with a mesh coating of metal threads made of refractory steel alloy for high temperatures. Advantageously, such packing can be impregnated with lubricating and/or locking and/or inhibiting corrosion agents.

In a further possible alternative embodiment, at least the protruding portion 14a of the sealing gasket 14 or the entire sealing gasket 14 consists of one or more flexible expanded graphite sheets, without metal reinforcement or with an insert of smooth stainless steel sheet, or with an insert of stainless steel sheet perforated in a "grater" pattern.

In a further possible alternative embodiment, at least the protruding portion 14a of the sealing gasket 14 or the entire sealing gasket 14 consists of one or more mica-based sheets (lamellar-structured phlogopite and muscovite), reinforced internally with AISI 316/309 stainless steel sheets, advantageously perforated in a "double-grater" pattern.

In a further possible alternative embodiment, at least the protruding portion 14a of the sealing gasket 14 or the entire sealing gasket 14 consists of one or more boron nitride-based sheets, in a cubic (CBN) or hexagonal (HBN) shape.

In a further possible alternative embodiment, at least the protruding portion 14a of the sealing gasket 14, or the entire sealing gasket 14, consists of one or more braids made with carbon yarn, preferably impregnated with graphite powder and corrosion inhibitor.

In a further possible alternative embodiment, at least the protruding portion 14a of the sealing gasket 14, or the entire sealing gasket 14, consists of one or more braids made with high-temperature glass yarn, advantageously impregnated with PTFE, graphitized, and lubricated.

In a further possible alternative embodiment, at least the protruding portion 14a of the sealing gasket 14 or the entire sealing gasket 14 consists of one or more braids made with synthetic yarn, advantageously impregnated with PTFE, graphitized, and lubricated.

Sealing gaskets 14 made of or comprising such materials ensure, on one hand, adhesion to the bars B so as to allow them to be gripped by vacuum, and on the other hand, the substantial integrity of the surface of the bar B to which they adhere, without imprinting thereon marks, incisions, or gouges which are difficult to remove, leaving at most only surface marks which can be removed by simple brushing.

In the embodiment exemplified in the attached figures, the plate body 12 generally has a quadrangular shape. In alternative embodiments, the plate body 12 could have a different shape, for example, a prism with any polygonal base, a parallelepiped, a cylinder, or a solid of revolution, for example one with a circular or elliptical base depending, for example, also on the shape of the bar B and/or of the related mould.

Advantageously, the plate body 12 is made of aluminium alloy, for example aluminium alloy 6082 (aluminium-silicon-magnesium-manganese), or of stainless steel (e.g., AISI 304).

The handling device 10 then comprises connecting members 15 for completely and preferably detachably connecting the sealing gasket 14 to the plate body 12.

Advantageously, the connecting members 15 are configured to make a lateral containment of at least one attaching portion 14b of the sealing gasket 14, by which the sealing gasket 14 is connected to the plate body 12.

With reference to the depicted embodiment, the plate body 12 comprises a grooved seat 150 extending along the closed line along which the sealing gasket 14 extends and which is configured to accommodate the attaching portion 14b of the sealing gasket 14 itself.

In a preferred embodiment, the grooved seat 150 is formed along at least one section of the perimeter edge of the plate body 12 and preferably forms a step thereat. Advantageously, the grooved seat 150 is dovetail-shaped or is however provided with one or more retaining teeth for the sealing gasket 14, configured and arranged to engage with the attaching portion 14b of the latter.

The connecting members 15 comprise one or more containing and connecting plates 151, 152, configured for containing the attaching portion 14b of the sealing gasket 14 within the grooved seat 150 and for connecting the sealing gasket 14 to the plate body 12. The containing and connecting plates 151, 152 are fixed to the plate body 12, for example by threaded members not shown in detail.

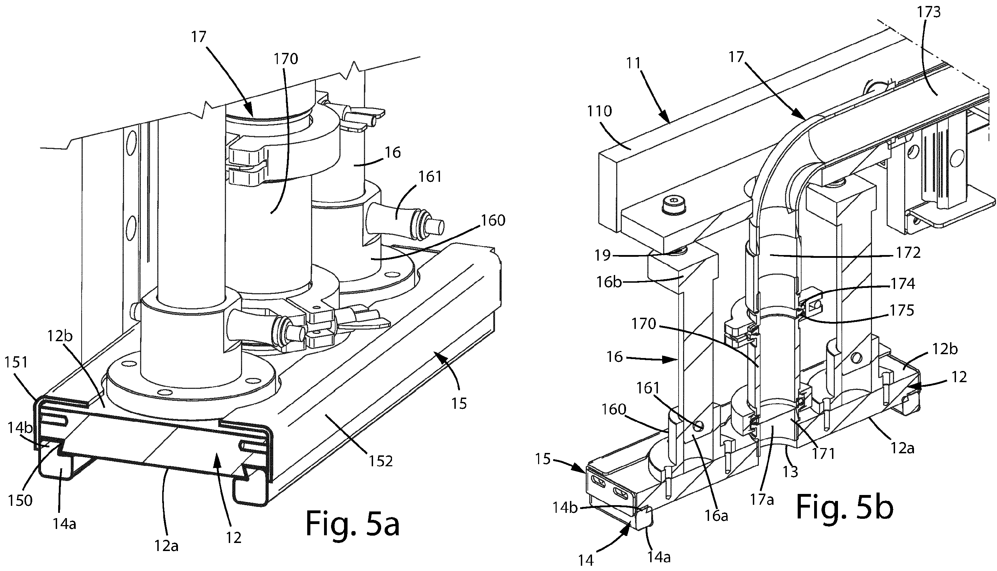

As shown in Figure 5A and Figure 5B, the sealing gasket 14 is arranged with its attaching portion 14b inside the grooved seat 150, where it is compressed and deformed by the pressure exerted by the containing and connecting plates 151, 152 and is therefore retained in seat by the retaining tooth formed by the dovetail shape.

Advantageously, the containing and connecting plates 151, 152 are made of high-temperature stainless steel (e.g., AISI 304).

Advantageously, the plate body 12 is connected to the supporting structure 11 with the interposition of elastically deformable members.

In the shown embodiment, for example, the plate body 12 is connected to the supporting structure 11 by means of at least one stem 16 having one end 16a connected thereto and the opposite end 16b coupled to the supporting structure 11. Advantageously, the end 16b is coupled to the supporting structure 11 in an axially slidable manner with interposition of at least one spring 19.

Providing elastically deformable members when connecting the plate body 12 to the supporting structure 11 gives the plate body 12 a mobility so as to allow its position to be better adapted to the surface of the face/base of the bar B to which the sealing gasket 14 is adhered for gripping the bar B itself; a surface which, although generally flat, can have flatness defects.

In the shown embodiment, a pair of stems 16 are provided, arranged parallel to each other and extending orthogonally from the plate body 12. However, the number of stems 16 could differ, also depending on the size of the plate body 12. In particular, even a single stem 16 can be present. In any case, as will become more apparent hereinafter, the at least one stem 16 could be internally hollow and could be coaxial with the at least one opening 13 or however arranged thereat and simultaneously act as a connecting conduit to the air suction unit 100. In such a case, advantageously, the elastically deformable members could consist of a section of the stem 16 (or of the connecting conduit to the air suction unit) configured to be elastically deformable (e.g., bellows-shaped).

Advantageously, the end 16a of each stem 16 is connected to the plate body 12 by detachable connecting members comprising a flanged sleeve 160, which is fixed, for example by screws, to the plate body 12 and into which the end 16a of the respective stem 16 is inserted. A pin 161, which is inserted in an extractable manner in holes formed in the stem 16 and in the sleeve 160, axially connects the former to the latter.

Advantageously, the stems 16 are made of stainless steel (e.g., AISI 304).

In a preferred embodiment, in order to allow the plate body 12 to move, the opening 13 is connectable to the air suction unit 100 by means of at least one connecting conduit 17 having a first end 17a connected to the opening 13 and a second end 17b configured to be connected to the air suction unit 100. Advantageously, the suction conduit has at least one axially deformable elastically-configured axial section 170.

For example, the axial section 170 is bellows-shaped and preferably made of stainless steel (e.g., AISI 304).

In the shown embodiment, the connecting conduit 17 comprises a plurality of tubular segments 170, 171, 172, 173 joined together by flanges 174 with interposition of gaskets 175 (for example, O-rings advantageously made of fluoroelastomer referred to as FKM Viton^{®}), wherein one of such tubular segments forms the axial section 170, advantageously bellows-shaped. Preferably, one or more of the tubular segments forming the connecting conduit 17 can be telescopic with respect to each other.

As mentioned above, in a possible alternative embodiment, the at least one stem 16 and the at least one connecting conduit 17 could coincide.

Advantageously, the handling device 10 can also comprise a moving group 18 of the plate body 12, or of the possible supporting structure 11 to which it is coupled, and/or of a supporting or holding structure 500 of at least one mould 400 (ingot mould) containing at least one bar B along at least two movement axes, respectively a first Z axis and a second X axis, orthogonal to each other. The moving group 18 is configured to move the plate body 12 (or the possible supporting structure 11 to which it is coupled) with respect to the mould containing the bar B, or vice versa to move the supporting or holding structure 500 of the mould 400 and with it the mould 400 relative to the plate body 12, in which case the latter is stationary. Advantageously, the first Z axis is vertically oriented and the second X axis is horizontally oriented.

In the embodiment shown in the attached figures, the moving group 18 is configured to move the supporting structure 11 along at least two movement axes, respectively a first Z axis and a second X axis, orthogonal to each other.

In such case, the moving group 18, for example, comprises:
- a first rectilinear guide 180 defining a first Z axis;
- a slide 181 which is slidably mounted along the first rectilinear guide 180;
- a second rectilinear guide 182 integral with the slide 181 and defining a second X axis, along which the supporting structure 11 is mounted in a slidable manner.

Advantageously, the supporting structure 11 comprises a profiled member 110, for example C-shaped, which is axially movably coupled along the second rectilinear guide 182.

Advantageously, at least one of the tubular segments 170, 171, 172, 173 forming the connecting conduit 17 extends parallel to the second X axis and is supported by the supporting structure 11 or by the profiled member forming it.

The moving group 18 then comprises actuators, for example electric, hydraulic, electro-hydraulic, or mechanical (not shown, being of a type known to those skilled in the art) actuators, arranged to drive the supporting structure 11 (or alternatively the supporting or holding structure 500 of the mould 400) sliding along the first Z axis and along the second X axis.

In an alternative embodiment not shown in the attached figures, the device 10, or the plate body 12, remains static, and a moving group is provided for a supporting or holding structure 500 of the mould 400 (ingot mould) containing the bar B to be extracted. Such moving group is configured to move the supporting or holding structure 500 of the mould 400, and thus the mould 400 with respect to the plate body 12, along at least two movement axes, respectively a first Z axis and a second X axis, orthogonal to each other. In such case, after the bar B has been gripped by the plate body 12, the supporting or holding structure 500 of the mould 400 lowers (movement along the first Z axis) and translates laterally (movement along the second X axis), freeing the space below the bar B grippingly held by the plate body 12 due to the sucking action generated in the chamber delimited by the plate body 12, the sealing gasket 14, and the face of the bar to which the latter adheres. At this point, by interrupting the air suction unit 100, the bar B falls by gravity, for example into an underlying cooling water tank.

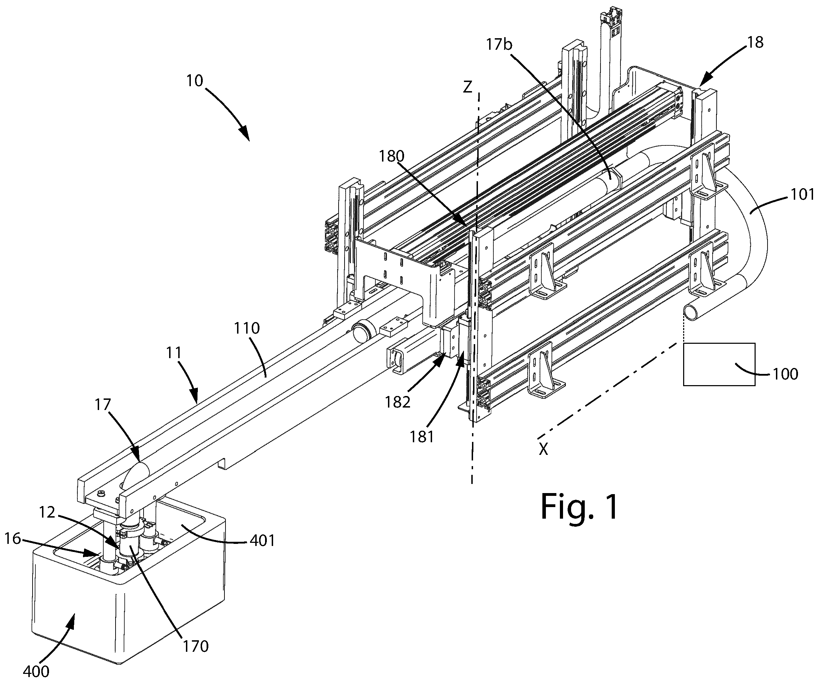

Figure 1 shows the handling device 10 in the gripping position of a bar B with the supporting structure 11 extended and lowered toward the mould 400.

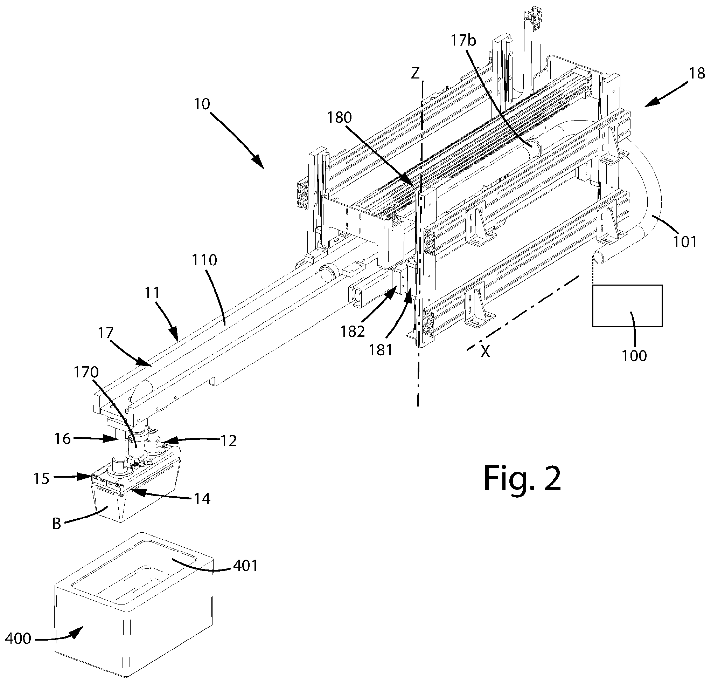

Figure 2 shows the handling device 10 in the gripping position of a bar B with the supporting structure 11 extended and raised.

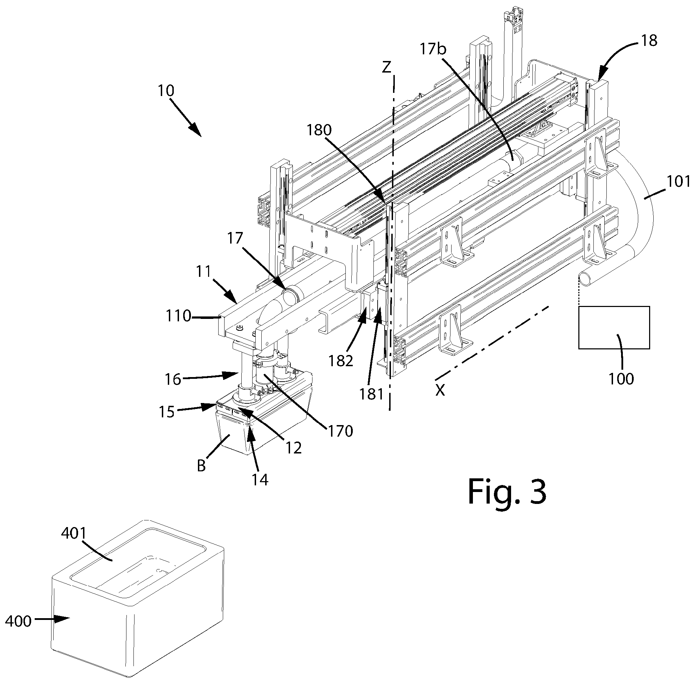

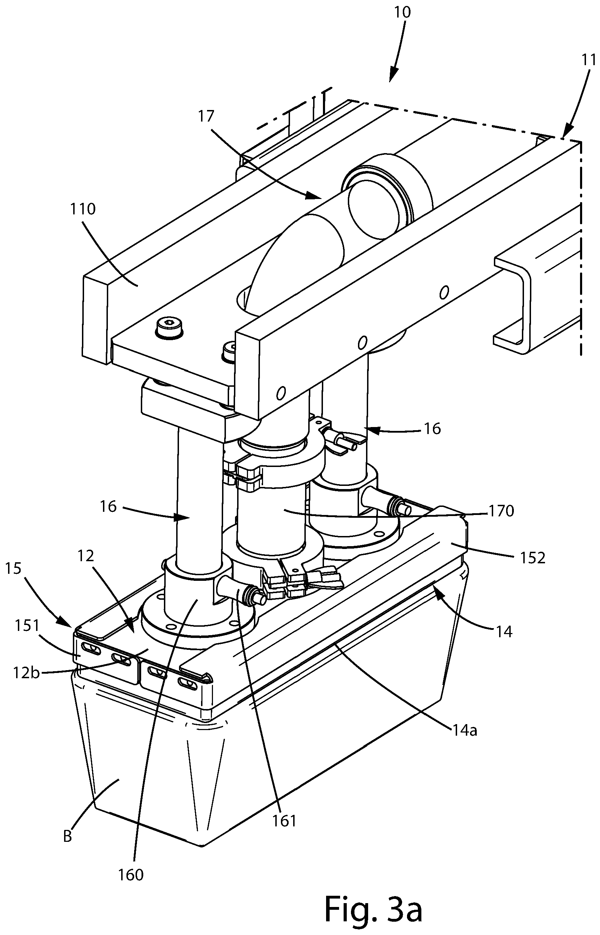

Figure 3 shows the handling device 10 in the gripping position of a bar B with the supporting structure 11 retracted and raised.

The air suction unit 100 comprises, for example, a pump which is connectable to the connecting conduit 17, advantageously by a flexible tubing 101.

The air suction unit 100 is adapted to generate a vacuum field of -0.5/-0.3 relative mbar.

Another object of the present invention is a machine 300 for producing metal bars, especially precious metal bars of the type of gold, silver, copper or their alloys, comprising at least one first operating station 301 configured to accommodate at least one mould 400 comprising at least one cavity 401 for producing at least one bar B, and a handling device 10 according to the present invention arranged to operate at least at the first operating station 301 in order to extract the bar B from the mould 400.

The first operating station 301 can be an extracting-only station, or a station for solidifying the molten metal present in the mould 400 and subsequently extracting the bar solidified therein, or again a melting, solidifying and extracting station. In a possible embodiment, the first operating station 301 is a solidification and extraction station positioned on the same plane as a heating station for the mould 400, intended for melting the metal inside the mould 400, wherein the mould 400 is made to slide on said plane from the melting station to the first operating station 301 for solidifying and extracting. Advantageously, the first operating station 301 can be a station for melting metal and solidifying the molten metal forming the bar B, i.e., it can comprise a heating device for the mould 400 and/or for the metal charge contained therein, in order to melt the metal, and also housing a solidifying station in the same station. The melting of the solid metal can occur directly in the mould 400; in such case, a determined quantity of solid metal is loaded into each cavity 401 of the mould 400.

Alternatively, the melting of the solid metal can occur in a crucible distinct from the mould 400; in such case, the molten metal is poured from the crucible into each cavity 401 of the mould 400.

The handling device 10 is arranged to extract the solidified and, advantageously, still incandescent bar B (i.e., at temperatures generally between 600°C and 900°C) from the cavity 401, so that the mould 400 can be used to form new bars B while still at a temperature similar to that of the extracted bar B, without needing to be cooled down to temperatures close to the room temperature. This significantly reduces the energy costs of the machine 300 and allows a better control of the solidifying step.

Due to providing a sealing gasket 14 as described above, the handling device 10 is capable of handling (gripping and moving) still incandescent metal bars B, without damaging the gripping surface thereof (i.e., the face or base surface of the bar B on which the sealing gasket 14 rests and adheres) by incisions, gouges, or scratches which, in order to be removed, require subsequent finishing processing, other than ordinary brushing.

To this end, advantageously the elastic support of the plate body 12 also contributes, a support which allows a certain degree of positional adaptation of the plate body 12 to the gripping surface of the bar B.

The handling device 10 further allows the bars B to be removed from the respective cavities 401 without needing to tilt the mould 400 itself; this allows to further preserve the integrity of the bars B and their surfaces.

To this end, advantageously the moving group 18, in one of the possible alternative embodiments and as described above, also contributes.

In a preferred embodiment, the machine 300 comprises at least one second operating station 302 configured to accommodate the bar B extracted from the mould 400. In such case, advantageously, the handling device 10 can be arranged to operate at least between the first operating station 301 and the second operating station 302.

The second operating station 302, for example, can be a controlled cooling station for the bars B extracted from the moulds 400 and/or a station for picking up and moving away the bars B.

The machine 300 can be of the tunnel type.

Alternatively, the machine 300 can comprise a chamber closed, or however closable, with respect to the external environment, in which the first operating station 301 and, if present, the second operating station 302 are formed.

The first operating station 301 and the possible second operating station 302 can be formed in respective compartments in which the environment inside the closed chamber is divided by movable partitions.

In such case, the handling device 10 can be arranged to operate between such compartments. In the shown example, the machine 300 comprises a closed or closable chamber inside which there are at least two compartments: a first compartment 3010 in which the first operating station 301 is present, and a second compartment 3020 in which the second operating station 302 is present. The first compartment 3010 and the second compartment 3020 are in communication with each other through an opening closable by a movable partition 303.

At the first operating station 301, the steps of filling the mould 400 and solidifying the molten metal present therein occur. Preferably, the mould 400 is filled with solid-state metal, and melting occurs directly in the mould 400.

The second operating station 302 is a station for cooling and/or picking up and moving away the bars B extracted from the mould 400.

The handling device 10 is preferably arranged to operate between the first operating station 301 and the second operating station 302. Advantageously, the supporting structure 11 is alternately movable between the first operating station 301 and the second operating station 302 through the opening which connects the two.

Advantageously, the moving group 18 is arranged at the first operating station 301 or the second operating station 302, or, preferably, it is housed in a third compartment 3030 placed on the side of one of them. As mentioned above, in a non-depicted possible alternative embodiment, the moving group 18 is configured to move the supporting or holding structure 500 of the mould 400 with respect to the plate body 12, which, instead, remains stable (stationary) at the first operating station 301, in such case possibly providing a mechanism for transferring the bars extracted from the mould 400 from the first operating station 301 to the possible second operating station 302.

The handling device being the subject of the present invention has the advantage of allowing the bars to be extracted from the mould while both are still incandescent; this enables the subsequent filling of the mould with metal for forming subsequent bars while the mould itself is still incandescent. If the metal is loaded into the mould in a solid state, this allows a reduction in time and therefore in the heating costs of the assembly consisting of the mould and the metal to be melted.

The handling device according to the present invention then allows the bars to be gripped, extracted and released in a safe and reliable manner, while preserving their integrity and surface quality.

The handling device for handling incandescent metal bars, especially incandescent precious metal bars, thus conceived, is susceptible to numerous modifications and variants, all falling within the invention; furthermore, all details are replaceable by technically equivalent elements. In practice, the materials used, as well as the dimensions, can be any depending on the technical requirements.

## Claims

1. Handling device (10) for handling incandescent metal bars (B), at temperatures above 500°C, especially incandescent precious metal bars, comprising:
- at least one plate body (12) having a first face (12a) and a second face (12b) opposite to each other and at least one opening (13) extending between said first face (12a) and said second face (12b) and configured to be connected to an air suction unit (100);
- at least one sealing gasket (14) configured to make an air sealing and connected to said plate body (12) along a closed line surrounding said at least one opening (13), wherein said sealing gasket (14) comprises a protruding portion (14a) from said first face (12a) to delimit a suction chamber together with it;
- wherein at least said protruding portion (14a) of said sealing gasket (14) is made of at least one material resistant to temperatures above 500°C, preferably comprised between 500°C and 1000°C, even more preferably comprised between 600°C and 900°C.

2. Handling device (10) according to claim 1, wherein at least said protruding portion (14a) of said sealing gasket (14) is made to be deformable, preferably elastically deformable in compression and/or bending.

3. Handling device (10) according to claim 1 or 2, wherein at least said protruding portion (14a) of said sealing gasket (14) is made of at least one material selected from:
- materials comprising silica fibers;
- materials comprising graphite;
- materials comprising mica;
- materials comprising boron nitride;
- materials comprising carbon
- materials made of glass fibers;
- materials made of synthetic yarns or fibers.

4. Handling device (10) according to claim 3, wherein at least said protruding portion (14a) of said sealing gasket (14) consists of at least one fabric, tape, braid, packing or the like made at least partially with fibers, threads, yarns or sheets of at least one said material.

5. Handling device (10) according to one or more of the preceding claims, wherein at least said protruding portion (14a) of said sealing gasket (14) comprises at least one insert and/or at least one reinforcing coating made of metal, preferably stainless steel.

6. Handling device (10) according to one of claims 3 to 5, wherein at least said protruding portion (14a) of said sealing gasket (14) consists of one or more packings made of a material comprising silica fibers with a silica (SiO₂) content greater than or equal to 94% by mass proportion and/or one or more graphite packings.

7. Handling device (10) according to one of claims 3 to 5, wherein at least said protruding portion (14a) of said sealing gasket (14) consists of one or more expanded graphite and/or mica-based and/or boron nitride-based sheets.

8. Handling device (10) according to one of claims 3 **to 5,** wherein at least said protruding portion (14a) of said sealing gasket (14) consists of one or more braids made with carbon yarn and/or glass yarn and/or synthetic yarn.

9. Handling device (10) according to any one of the preceding claims, comprising connecting members (15) for completely and detachably connecting said sealing gasket (14) to said plate body (12).

10. Handling device (10) according to claim 9, wherein said connecting members (15) comprise at least one containing and connecting plate (151, 152) configured for containing at least one attaching portion (14b) of said sealing gasket (14) within a grooved seat (150) extending along said closed line and configured to accommodate said attaching portion (14b), said at least one containing and connecting plate (151, 152) being removably fixed to said plate body (12).

11. Handling device (10) according to claim 10, wherein at least one retaining tooth configured to engage with said attaching portion (14b) of said sealing gasket (14) is along at least one section of said grooved seat (150).

12. Handling device (10) according to any one of the preceding claims, further comprising at least one connecting conduit (17) of said at least one opening (13) to said suction unit (100), wherein said connecting conduit (17) comprises a first end connected to said at least one opening (13) and a second end configured to be connected to said air suction unit (100) .

13. Handling device (10) according to claim 12, wherein said connecting conduit (170) comprises an axially-deformable elastically-configured axial section (170), preferably bellows-shaped.

14. Handling device (10) according to any one of the preceding claims, comprising a supporting structure (11), wherein said plate body (12) is connected to said supporting structure (11) with interposition of elastically deformable members.

15. Handling device (10) according to claim 14, wherein said plate body (12) is connected to said supporting structure (11) by means of at least one stem (16) having one end (16a) connected to said plate body (12) and the opposite end (16b) coupled to said supporting structure (11).

16. Handling device (10) according to claim 15, wherein said opposite end (16b) is coupled to said supporting structure (11) in an axially slidable manner with interposition of elastically deformable members, preferably at least one spring (19).

17. Device according to claim 15 or 16 and one or more of claims 12 to 14, wherein said at least one stem (16) is internally hollow and forms at least one section of said connecting conduit (17).

18. Handling device (10) according to one or more of the preceding claims, comprising a moving group (18) of said plate body (12) and/or a supporting or holding structure (500) of at least one mold (400) containing at least one bar (B) along at least two mutually orthogonal axes (X; Z), wherein said moving group (18) is configured to move said plate body (12) relative to the mould (400) containing said bar (B) or vice versa.

19. Machine (300) for producing metal bars (B), especially precious metal bars, comprising at least one first operating station (301) configured to accommodate at least one mould (400) comprising at least one cavity (401) for producing at least one bar (B) and a handling device (10) according to one or more of the preceding claims arranged to operate at least at said first operating station (301).

## Patentansprüche

1. Handhabungsvorrichtung (10) zur Handhabung glühender Metallbarren (B) bei Temperaturen über 500°C, insbesondere glühender Edelmetallbarren, umfassend:
- mindestens einen Plattenkörper (12) mit einer ersten Fläche (12a) und einer zweiten Fläche (12b), die einander gegenüberliegen, und mindestens einer Öffnung (13), die sich zwischen der ersten Fläche (12a) und der zweiten Fläche (12b) erstreckt und zur Verbindung mit einer Luftabsaugeinheit (100) ausgelegt ist;
- mindestens eine Dichtung (14), die zur Herstellung einer luftdichten Abdichtung ausgelegt und entlang einer geschlossenen Linie, die die mindestens eine Öffnung (13) umgibt, mit dem Plattenkörper (12) verbunden ist, wobei die Dichtung (14) einen von der ersten Fläche (12a) vorstehenden Abschnitt (14a) umfasst, der zusammen mit dieser eine Saugkammer begrenzt;
- wobei mindestens der vorstehende Abschnitt (14a) der Dichtung (14) aus mindestens einem Material besteht, das Temperaturen über 500°C standhält, vorzugsweise Temperaturen zwischen 500°C und 1000°C, noch bevorzugter zwischen 600°C und 900°C.

2. Handhabungsvorrichtung (10) nach Anspruch 1, wobei mindestens der vorstehende Abschnitt (14a) der Dichtung (14) verformbar, vorzugsweise unter Druck und/oder Biegung elastisch verformbar, ausgebildet ist.

3. Handhabungsvorrichtung (10) nach Anspruch 1 oder 2, wobei mindestens der vorstehende Abschnitt (14a) der Dichtung (14) aus mindestens einem Material besteht, das ausgewählt ist aus:
- Materialien, die Siliciumdioxidfasern umfassen;
- Materialien, die Graphit umfassen;
- Materialien, die Glimmer umfassen;
- Materialien, die Bornitrid umfassen;
- Materialien, die Kohlenstoff umfassen
- Materialien aus Glasfasern;
- Materialien aus synthetischen Garnen oder Fasern.

4. Handhabungsvorrichtung (10) nach Anspruch 3, wobei mindestens der vorstehende Abschnitt (14a) der Dichtung (14) aus mindestens einem Gewebe, Band, Geflecht, einer Packung oder dergleichen besteht, das bzw. die zumindest teilweise aus Fasern, Fäden, Garnen oder Folien mindestens eines der genannten Materialien hergestellt ist.

5. Handhabungsvorrichtung (10) nach einem oder mehreren der vorhergehenden Ansprüche, wobei mindestens der vorstehende Abschnitt (14a) der Dichtung (14) mindestens eine Einlage und/oder mindestens eine verstärkende Beschichtung aus Metall, vorzugsweise Edelstahl, umfasst.

6. Handhabungsvorrichtung (10) nach einem der Ansprüche 3 bis 5, wobei mindestens der vorstehende Abschnitt (14a) der Dichtung (14) aus einer oder mehreren Packungen aus einem Material, das Siliciumdioxidfasern mit einem Siliciumdioxid-(SiO₂)-Gehalt von mindestens 94% Massenanteil umfasst, und/oder einer oder mehreren Graphitpackungen besteht.

7. Handhabungsvorrichtung (10) nach einem der Ansprüche 3 bis 5, wobei mindestens der vorstehende Abschnitt (14a) der Dichtung (14) aus einer oder mehreren Folien aus expandiertem Graphit und/oder auf Glimmerbasis und/oder auf Bornitridbasis besteht.

8. Handhabungsvorrichtung (10) nach einem der Ansprüche 3 bis 5, wobei mindestens der vorstehende Abschnitt (14a) der Dichtung (14) aus einem oder mehreren Geflechten aus Kohlenstoffgarn und/oder Glasgarn und/oder synthetischem Garn besteht.

9. Handhabungsvorrichtung (10) nach einem der vorhergehenden Ansprüche, umfassend Verbindungselemente (15) zur vollständig lösbaren Verbindung der Dichtung (14) mit dem Plattenkörper (12).

10. Handhabungsvorrichtung (10) nach Anspruch 9, wobei die Verbindungselemente (15) mindestens eine Halte- und Verbindungsplatte (151, 152) umfassen, die dazu ausgelegt ist, mindestens einen Befestigungsabschnitt (14b) der Dichtung (14) in einer entlang der geschlossenen Linie verlaufenden Nutaufnahme (150) zu halten, die zur Aufnahme des Befestigungsabschnitts (14b) ausgelegt ist, wobei die mindestens eine Halte- und Verbindungsplatte (151, 152) lösbar am Plattenkörper (12) befestigt ist.

11. Handhabungsvorrichtung (10) nach Anspruch 10, wobei entlang mindestens eines Abschnitts der Nutaufnahme (150) mindestens ein Haltezahn angeordnet ist, der dazu ausgelegt ist, mit dem Befestigungsabschnitt (14b) der Dichtung (14) in Eingriff zu treten.

12. Handhabungsvorrichtung (10) nach einem der vorhergehenden Ansprüche, ferner umfassend mindestens eine Verbindungsleitung (17) zwischen der mindestens einen Öffnung (13) und der Absaugeinheit (100), wobei die Verbindungsleitung (17) ein erstes Ende, das mit der mindestens einen Öffnung (13) verbunden ist, und ein zweites Ende umfasst, das zur Verbindung mit der Luftabsaugeinheit (100) ausgelegt ist.

13. Handhabungsvorrichtung (10) nach Anspruch 12, wobei die Verbindungsleitung (170) einen axial verformbaren, elastisch ausgebildeten Axialabschnitt (170) umfasst, der vorzugsweise balgförmig ist.

14. Handhabungsvorrichtung (10) nach einem der vorhergehenden Ansprüche, umfassend eine Tragstruktur (11), wobei der Plattenkörper (12) unter Zwischenfügung elastisch verformbarer Elemente mit der Tragstruktur (11) verbunden ist.

15. Handhabungsvorrichtung (10) nach Anspruch 14, wobei der Plattenkörper (12) mittels mindestens einer Stange (16) mit der Tragstruktur (11) verbunden ist, wobei ein Ende (16a) der Stange mit dem Plattenkörper (12) verbunden und das gegenüberliegende Ende (16b) mit der Tragstruktur (11) gekoppelt ist.

16. Handhabungsvorrichtung (10) nach Anspruch 15, wobei das gegenüberliegende Ende (16b) unter Zwischenfügung elastisch verformbarer Elemente, vorzugsweise mindestens einer Feder (19), axial verschiebbar mit der Tragstruktur (11) gekoppelt ist.

17. Vorrichtung nach Anspruch 15 oder 16 und einem oder mehreren der Ansprüche 12 bis 14, wobei die mindestens eine Stange (16) innen hohl ist und mindestens einen Abschnitt der Verbindungsleitung (17) bildet.

18. Handhabungsvorrichtung (10) nach einem oder mehreren der vorhergehenden Ansprüche, umfassend eine Bewegungseinheit (18) für den Plattenkörper (12) und/oder für eine Trag- oder Haltestruktur (500) mindestens einer Form (400), die mindestens einen Barren (B) enthält, entlang mindestens zweier zueinander senkrechter Achsen (X; Z), wobei die Bewegungseinheit (18) dazu ausgelegt ist, den Plattenkörper (12) relativ zu der den Barren (B) enthaltenden Form (400) oder umgekehrt zu bewegen.

19. Maschine (300) zur Herstellung von Metallbarren (B), insbesondere Edelmetallbarren, umfassend mindestens eine erste Bearbeitungsstation (301), die zur Aufnahme mindestens einer Form (400) mit mindestens einem Hohlraum (401) zur Herstellung mindestens eines Barrens (B) ausgelegt ist, und eine Handhabungsvorrichtung (10) nach einem oder mehreren der vorhergehenden Ansprüche, die dazu angeordnet ist, zumindest an der ersten Bearbeitungsstation (301) zu arbeiten.

## Revendications

1. Dispositif de manipulation (10) destiné à manipuler des barres métalliques incandescentes (B), à des températures supérieures à 500°C, notamment des barres de métaux précieux incandescentes, comprenant:
- au moins un corps de plaque (12) présentant une première face (12a) et une deuxième face (12b) opposées l'une à l'autre, ainsi qu'au moins une ouverture (13) s'étendant entre ladite première face (12a) et ladite deuxième face (12b) et configurée pour être reliée à une unité d'aspiration d'air (100);
- au moins un joint d'étanchéité (14) configuré pour assurer une étanchéité à l'air et relié audit corps de plaque (12) le long d'une ligne fermée entourant ladite au moins une ouverture (13), ledit joint d'étanchéité (14) comprenant une partie saillante (14a) faisant saillie à partir de ladite première face (12a) de manière à délimiter avec celle-ci une chambre d'aspiration;
- dans lequel au moins ladite partie saillante (14a) dudit joint d'étanchéité (14) est constituée d'au moins un matériau résistant à des températures supérieures à 500°C, de préférence comprises entre 500°C et 1000°C, et encore plus préférentiellement comprises entre 600°C et 900°C.

2. Dispositif de manipulation (10) selon la revendication 1, dans lequel au moins ladite partie saillante (14a) dudit joint d'étanchéité (14) est réalisée de manière à être déformable, de préférence élastiquement déformable en compression et/ou en flexion.

3. Dispositif de manipulation (10) selon la revendication 1 ou 2, dans lequel au moins ladite partie saillante (14a) dudit joint d'étanchéité (14) est constituée d'au moins un matériau choisi parmi:
- les matériaux comprenant des fibres de silice;
- les matériaux comprenant du graphite;
- les matériaux comprenant du mica;
- les matériaux comprenant du nitrure de bore;
- les matériaux comprenant du carbone
- les matériaux constitués de fibres de verre;
- les matériaux constitués de fils ou de fibres synthétiques.

4. Dispositif de manipulation (10) selon la revendication 3, dans lequel au moins ladite partie saillante (14a) dudit joint d'étanchéité (14) est constituée d'au moins un tissu, ruban, tresse, bourrage ou élément similaire, réalisé au moins partiellement à partir de fibres, fils, filés ou feuilles d'au moins un desdits matériaux.

5. Dispositif de manipulation (10) selon une ou plusieurs des revendications précédentes, dans lequel au moins ladite partie saillante (14a) dudit joint d'étanchéité (14) comprend au moins un insert et/ou au moins un revêtement de renfort métallique, de préférence en acier inoxydable.

6. Dispositif de manipulation (10) selon l'une des revendications 3 à 5, dans lequel au moins ladite partie saillante (14a) dudit joint d'étanchéité (14) est constituée d'un ou plusieurs bourrages réalisés dans un matériau comprenant des fibres de silice présentant une teneur massique en silice (SiO₂) supérieure ou égale à 94%, et/ou d'un ou plusieurs bourrages en graphite.

7. Dispositif de manipulation (10) selon l'une des revendications 3 à 5, dans lequel au moins ladite partie saillante (14a) dudit joint d'étanchéité (14) est constituée d'une ou plusieurs feuilles de graphite expansé et/ou à base de mica et/ou à base de nitrure de bore.

8. Dispositif de manipulation (10) selon l'une des revendications 3 à 5, dans lequel au moins ladite partie saillante (14a) dudit joint d'étanchéité (14) est constituée d'une ou plusieurs tresses réalisées à partir de fils de carbone et/ou de fils de verre et/ou de fils synthétiques.

9. Dispositif de manipulation (10) selon l'une quelconque des revendications précédentes, comprenant des éléments de liaison (15) destinés à relier intégralement et de manière amovible ledit joint d'étanchéité (14) audit corps de plaque (12).

10. Dispositif de manipulation (10) selon la revendication 9, dans lequel lesdits éléments de liaison (15) comprennent au moins une plaque de maintien et de liaison (151, 152), configurée pour maintenir au moins une partie de fixation (14b) dudit joint d'étanchéité (14) dans un logement rainuré (150) s'étendant le long de ladite ligne fermée et configuré pour recevoir ladite partie de fixation (14b), ladite au moins une plaque de maintien et de liaison (151, 152) étant fixée de manière amovible audit corps de plaque (12).

11. Dispositif de manipulation (10) selon la revendication 10, dans lequel au moins une dent de retenue, configurée pour coopérer avec ladite partie de fixation (14b) dudit joint d'étanchéité (14), est disposée le long d'au moins une portion dudit logement rainuré (150).

12. Dispositif de manipulation (10) selon l'une quelconque des revendications précédentes, comprenant en outre au moins un conduit de liaison (17) reliant ladite au moins une ouverture (13) à ladite unité d'aspiration (100), ledit conduit de liaison (17) comprenant une première extrémité reliée à ladite au moins une ouverture (13) et une deuxième extrémité configurée pour être reliée à ladite unité d'aspiration d'air (100).

13. Dispositif de manipulation (10) selon la revendication 12, dans lequel ledit conduit de liaison (170) comprend une section axiale (170) configurée pour être déformable élastiquement dans la direction axiale, de préférence sous la forme d'un soufflet.

14. Dispositif de manipulation (10) selon l'une quelconque des revendications précédentes, comprenant une structure de support (11), ledit corps de plaque (12) étant relié à ladite structure de support (11) avec interposition d'éléments élastiquement déformables.

15. Dispositif de manipulation (10) selon la revendication 14, dans lequel ledit corps de plaque (12) est relié à ladite structure de support (11) au moyen d'au moins une tige (16) présentant une première extrémité (16a) reliée audit corps de plaque (12) et une deuxième extrémité opposée (16b) couplée à ladite structure de support (11).

16. Dispositif de manipulation (10) selon la revendication 15, dans lequel ladite deuxième extrémité opposée (16b) est couplée à ladite structure de support (11) de manière à pouvoir coulisser axialement, avec interposition d'éléments élastiquement déformables, de préférence d'au moins un ressort (19).

17. Dispositif selon la revendication 15 ou 16 et l'une ou plusieurs des revendications 12 à 14, dans lequel ladite au moins une tige (16) est creuse intérieurement et forme au moins une section dudit conduit de liaison (17).

18. Dispositif de manipulation (10) selon une ou plusieurs des revendications précédentes, comprenant un ensemble de déplacement (18) dudit corps de plaque (12) et/ou une structure de support ou de maintien (500) d'au moins un moule (400) contenant au moins une barre (B), ledit ensemble de déplacement (18) étant configuré pour déplacer ledit corps de plaque (12) par rapport audit moule (400) contenant ladite barre (B), ou inversement, suivant au moins deux axes mutuellement orthogonaux (X; Z).

19. Machine (300) destinée à produire des barres métalliques (B), notamment des barres de métaux précieux, comprenant au moins une première station de travail (301), configurée pour recevoir au moins un moule (400) comprenant au moins une cavité (401) destinée à produire au moins une barre (B), et un dispositif de manipulation (10) selon une ou plusieurs des revendications précédentes, disposé de manière à fonctionner au moins au niveau de ladite première station de travail (301).
